(19) Europäisches Patentamt
European Patent Office
Office européen des brevets

(11) Veröffentlichungsnummer : **0 018 538**
**B1**

(12) # EUROPÄISCHE PATENTSCHRIFT

(45) Veröffentlichungstag der Patentschrift : **11.05.83**

(51) Int. Cl.$^3$ : **C 09 B 1/20**, C 09 B 55/00, C 07 C 50/18, C 07 D215/22

(21) Anmeldenummer : **80102011.6**

(22) Anmeldetag : **15.04.80**

(54) **Anthrachinon-Derivate, Verfahren zu ihrer Herstellung, Verfahren zum Pigmentieren organischer makromolekularer Stoffe sowie pigmentiertes organisches makromolekulares Material.**

(30) Priorität : **28.04.79 DE 2917312**

(43) Veröffentlichungstag der Anmeldung : **12.11.80 Patentblatt 80/23**

(45) Bekanntmachung des Hinweises auf die Patenterteilung : **11.05.83 Patentblatt 83/19**

(84) Benannte Vertragsstaaten : **CH DE FR GB LI**

(56) Entgegenhaltungen :
**DE A 2 728 863**
**DE A 2 728 864**
**PATENT ABSTRACTS OF JAPAN, unexamined applications, Sektion C, Band 1, Nr. 27, 28. März 1977 The Patent Office Japanese Government, Seite 1261 C 76**

(73) Patentinhaber : **BAYER AG**
**Zentralbereich Patente, Marken und Lizenzen**
**D-5090 Leverkusen 1, Bayerwerk (DE)**

(72) Erfinder : **Neeff, Rütger, Dr.**
**Berta-von-Suttner-Strasse 22**
**D-5090 Leverkusen (DE)**
Erfinder : **Rolf, Meinhard, Dr.**
**Berta-von-Suttner-Strasse 24**
**D-5090 Leverkusen (DE)**
Erfinder : **Müller, Walter**
**Pfarrer-Klein-Strasse 3**
**D-5090 Leverkusen (DE)**

**EP 0 018 538 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Anthrachinon-Derivate, Verfahren zu ihrer Herstellung, Verfahren zum Pigmentieren organischer makromolekularer Stoffe sowie pigmentiertes organisches makromolekulares Material

Die Erfindung betrifft Anthrachinon-Derivate, die in einer ihrer tautomeren Strukturen der Formel

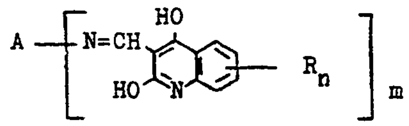

(Ia)

entsprechen, Verfahren zu ihrer Herstellung sowie ihre Verwendung als Pigmente.

Weitere tautomere Formen der erfindungsgemäßen Verbindungen entsprechen den Formeln

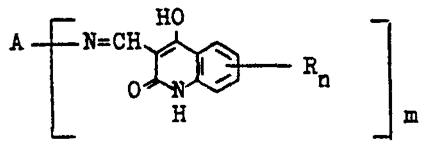

(Ib)

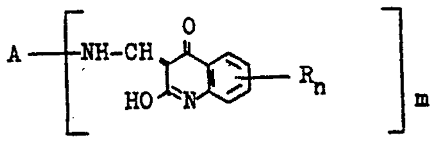

(Ic)

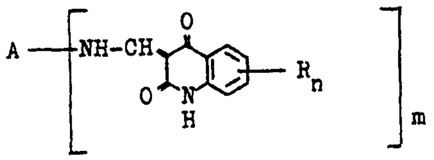

(Id)

In den Formeln (Ia), (Ib), (Ic) und (Id) bedeuten

A einen Sulfonsäuregruppen-freien, gegebenenfalls weitersubstituierten Anthrachinonrest, der vorzugsweise aus höchstens 5 kondensierten Ringen besteht,

m eine Zahl von 1-4, vorzugsweise 1 oder 2,

R einen Substituenten und

n 0, 1, 2, 3 oder 4.

Geeignete Substituenten R sind beispielsweise Halogen wie Chlor und Brom, $C_1$-$C_4$-Alkyl, $C_1$-$C_4$-Alkoxy, Nitro, Trifluormethyl, Cyan, gegebenenfalls substituiertes Carbamoyl und Sulfamoyl, Acylamino oder Arylamino.

Als Substituenten der Carbamoyl- und Sulfamoylgruppen kommen $C_1$-$C_4$-Alkyl, gegebenenfalls durch $C_1$-$C_4$-Alkyl, $C_1$-$C_4$-Alkoxy, Fluor, Chlor, Brom oder Nitro substituiertes Phenyl und Benzyl infrage. Als Acylgruppen sind insbesondere $C_1$-$C_4$-Alkylcarbonyl und gegebenenfalls im Benzolkern durch Chlor, $C_1$-$C_4$-Alkyl, $C_1$-$C_4$-Alkoxy oder Nitro substituiertes Benzoyl zu nennen. Arylamino ist insbesondere gegebenenfalls durch $C_1$-$C_4$-Alkyl, $C_1$-$C_4$-Alkoxy, Fluor, Chlor, Brom oder Nitro substituiertes Phenylamino.

Zur Herstellung der neuen Anthrachinon-Derivate finden, wie später noch gezeigt wird, Aminoanthrachinone der Formel

$$A—(NH_2)_m \qquad (II)$$

in der A und m die oben angegebene Bedeutung besitzen, Verwendung.

Geeignete Amino-anthrachinone der Formel (II) sind z. B.: 1-Amino-anthrachinon, 2-Amino-anthrachinon, 1-Amino-2-chloranthrachinon, 1-Amino-4-chloranthrachinon, 1-Amino-5-chloranthrachinon, 1-Amino-6-chloranthrachinon, 1-Amino-6-(7)-chloranthrachinon (Gemisch), 1-Amino-5,8-dichloranthrachinon, 1-Amino-2-bromanthrachinon, 1-Amino-2,4-dibromanthrachinon, 1-Amino-6,7-dichloranthrachinon, 1-Amino-6-fluoranthrachinon, 1-Amino-7-fluoranthrachinon, 1-Amino-6,7-difluoranthrachinon, 2-Amino-1-chloranthrachinon, 2-Amino-3-chloranthrachinon, 2-Amino-3-bromanthrachinon, 1-Amino-4-nitroanthrachinon, 1-Amino-5-nitroanthrachinon, 1-Amino-2-methylanthrachinon, 1-Amino-2-methyl-4-chloranthrachinon, 1-Amino-2-methyl-4-bromanthrachinon, 1-Aminoanthrachinon-2-carbonsäure, 1-Aminoan-

thrachinon-2-carbonsäureamid, 1-Aminoanthrachinon-2-carbonsäuremethylester, 1-Amino-4-nitroanthrachinon-2-carbonsäure, 1-Amino-2-acetylanthrachinon, 1-Amino-5-benzoylaminoanthrachinon, 1-Amino-4-benzoylaminoanthrachinon, 1-Amino-4-hydroxyanthrachinon, 1-Amino-5-hydroxyanthrachinon, 1-Amino-4-methoxyanthrachinon, 1-Amino-2-methoxy-4-hydroxyanthrachinon, 1-Amino-4-methylaminoanthrachinon, 1-Amino-4-cyclohexylaminoanthrachinon, 1-Amino-4-anilinoanthrachinon, 1-Amino-6-methylmercaptoanthrachinon, 2-Phenyl-6-amino-4,5-phthaloylbenzimidazol, 6-Chlor-2-amino-3,4-phthaloylacridon, 7-Chlor-2-amino-3,4-phthaloylacridon, 5-Chlor-8-amino-3,4-phthaloylacridon, 3-Methyl-6-amino-anthrapyridon, 3-Methyl-7-amino-anthrapyridon, 4-Amino-1,9-pyrazolanthron, 5-Amino-1,9-pyrazolanthron, 4-Amino-1,9-anthrapyrimidin, 5-Amino-1,9-anthrapyrimidin, 1,5-Diaminoanthrachinon, 1,4-Diaminoanthrachinon, 1,8-Diaminoanthrachinon, 2,6-Diaminoanthrachinon, 1,5-Diamino-4-chloranthrachinon, 1,4-Diamino-5-nitroanthrachinon, 1,5-Diamino-2,4,6,8-tetrabromanthrachinon, 1,5-Diamino-4,8-dihydroxyanthrachinon, 1,8-Diamino-4,5-dihydroxyanthrachinon, 4,4'-Diamino-1,1'-dianthrimid, 1-Amino-8-benzoylaminoanthrachinon und 1-Amino-2-brom-4-(4-methylphenylsulfonylamino)-anthrachinon.

Bevorzugte Anthrachinon-Derivate entsprechen der Formel

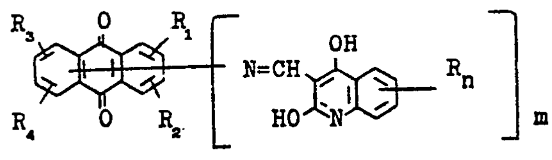

(III)

oder der entsprechenden tautomeren Formel,
worin

R, n und m die oben angegebene Bedeutung haben und

$R_1$ Wasserstoff, Halogen wie Fluor, Chlor und Brom, Nitro, $C_1$-$C_4$-Alkyl, $C_1$-$C_4$-Alkoxy, $C_1$-$C_4$-Alkylamino, Benzylamino, Cyclohexylamino, $C_1$-$C_4$-Alkylmercapto, gegebenenfalls durch $C_1$-$C_4$-Alkyl, $C_1$-$C_4$-Alkoxy, Fluor, Chlor, Brom oder Nitro substituiertes Phenylmercapto, $C_1$-$C_4$-Alkylcarbonyl, $C_1$-$C_4$-Alkoxycarbonyl, gegebenenfalls durch $C_1$-$C_4$-Alkyl, $C_1$-$C_4$-Alkoxy, Chlor oder Nitro substituiertes Phenylamino, gegebenenfalls durch $C_1$-$C_4$-Alkyl, Benzyl oder Phenyl mono- oder disubstituiertes Carbamoyl, wobei Phenyl durch $C_1$-$C_4$-Alkyl, $C_1$-$C_4$-Alkoxy, Fluor, Chlor, Brom oder Nitro substituiert sein kann, Carboxy, Hydroxy, $C_1$-$C_4$-Alkylcarbonylamino oder gegebenenfalls durch $C_1$-$C_4$-Alkyl, $C_1$-$C_4$-Alkoxy, Chlor, Brom oder Nitro substituiertes Benzoylamino, gegebenenfalls durch $C_1$-$C_4$-Alkyl, $C_1$-$C_4$-Alkoxy, Fluor, Chlor, Brom oder Nitro substituiertes Phenylsulfonylamino,

$R_2$ Wasserstoff, Chlor oder Hydroxy,

$R_3$ Wasserstoff, Halogen wie Fluor, Chlor oder Brom, Nitro, $C_1$-$C_4$-Alkyl, $C_1$-$C_4$-Alkoxy, $C_1$-$C_4$-Alkylamino, $C_1$-$C_4$-Alkylmercapto, gegebenenfalls durch $C_1$-$C_4$-Alkyl, $C_1$-$C_4$-Alkoxy, Fluor, Chlor, Brom oder Nitro substituiertes Phenylmercapto, $C_1$-$C_4$-Alkoxycarbonyl, $C_1$-$C_4$-Alkylcarbonyl, Benzylamino, Cyclohexylamino, gegebenenfalls durch $C_1$-$C_4$-Alkyl, $C_1$-$C_4$-Alkoxy, Chlor, Brom oder Nitro substituiertes Phenylamino, Carboxy, Hydroxy, gegebenenfalls durch $C_1$-$C_4$-Alkyl, Benzyl oder Phenyl mono- oder disubstituiertes Carbamoyl, wobei Phenyl durch $C_1$-$C_4$-Alkyl, $C_1$-$C_4$-Alkoxy, Fluor, Chlor, Brom oder Nitro substituiert sein kann, $C_1$-$C_4$-Alkylcarbonylamino, gegebenenfalls durch $C_1$-$C_4$-Alkyl, $C_1$-$C_4$-Alkoxy, Chlor, Brom oder Nitro substituiertes Benzoylamino, $C_1$-$C_4$-Alkylsulfonylamino oder gegebenenfalls durch $C_1$-$C_4$-Alkyl, $C_1$-$C_4$-Alkoxy, Fluor, Chlor, Brom oder Nitro substituiertes Phenylsulfonylamino und

$R_4$ Wasserstoff, Halogen wie Fluor, Chlor und Brom oder Hydroxy bedeuten.

Besonders bevorzugt sind Anthrachinon-Derivate, die in einer ihrer tautomeren Strukturen der Formel

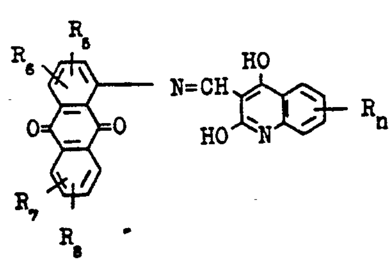

(IV)

entsprechen,
worin R und n die oben angegebene Bedeutung haben und

$R_5$, $R_6$, $R_7$ und $R_8$ Wasserstoff, Chlor, Brom, Carboxy, $C_1$-$C_4$-Alkoxycarbonyl, Carbamoyl, $C_1$-$C_4$-

Alkylcarbonylamino, gegebenenfalls durch 1 oder 2 Nitro oder 1 bis 5 Chlor oder Brom substituiertes Benzoylamino, $C_1$-$C_4$-Alkylsulfonylamino oder gegebenenfalls durch Methyl, Methoxy oder Chlor substituiertes Phenylsulfonylamino oder einen Rest der Formel

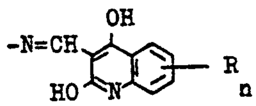

(V)

bedeuten.

Die Herstellung der Anthrachinon-Derivate (Ia-d) aus den Amino-anthrachinonen der Formel

$$A-(-NH_2)_m \qquad (II)$$

und den gegebenenfalls in 5, 6, 7- und/oder 8-Stellung substituierten 2,4-Dihydroxy-chinolinen der Formel

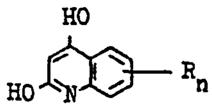

(VI)

in der R und n die oben angegebene Bedeutung haben, kann nach mehreren Verfahren erfolgen.

1) Man kondensiert die gegebenenfalls in 5, 6, 7- und/oder 8-Stellung substituierten 2,4-Dihydroxy-chinoline der Formel (VI) in einem gegen die Reaktionspartner inerten organischen Lösungsmittel bei 100-220 °C mit einem Orthoameisensäure-trialkylester der Formel

$$HC(OR')_3 \qquad (VII)$$

in der R' vorzugsweise für eine $C_1$-$C_4$-Alkylgruppe steht, und setzt anschließend die erhaltenen in 5, 6, 7- und/oder 8-Stellung gegebenenfalls substituierten 2-Hydroxy-3-alkoxymethylen-4-oxo-3,4-dihydro-chinoline

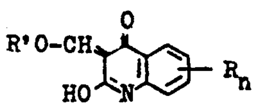

(VIII)

in der R, R' und n die oben angegebene Bedeutung besitzen, in dem gleichen oder einem anderen organischen Reaktionsmedium bei 100-220 °C, vorzugsweise 120-180 °C, mit einem Amino-anthrachinon der Formel

$$A-(-NH_2)_m \qquad (II)$$

um.

2) Man kondensiert die Amino-anthrachinone der Formel

$$A-(-NH_2)_m \qquad (II)$$

in einem gegen die Reaktionspartner inerten organischen Lösungsmittel bei 100-220 °C, vorzugsweise 120-180 °C, mit einem Orthoameisensäuretrialkylester der oben genannten Formel (VII) und setzt anschließend die erhaltenen Formiminoester der Formel

$$A-(N=CH-OR')_m \qquad (IX)$$

in der R' vorzugsweise für eine $C_1$-$C_4$-Alkylgruppe steht, in dem gleichen oder einem anderen organischen Reaktionsmedium bei 100-220 °C, vorzugsweise 120-180 °C, mit gegebenenfalls in 5, 6, 7- und/oder 8-Stellung substituierten 2,4-Dihydroxy-chinolinen der oben genannten Formel (VI) um.

Als organische Lösungsmittel eignen sich für die Verfahren (1) und (2) aromatische und heteroaromatische Verbindungen wie Toluol, Chlorbenzol, Pyridin, o-Dichlorbenzol, 1,2,4-Trichlorbenzol, Nitrobenzol, Alkohole wie Butanol, Diethylenglykolmonomethylether, Ether wie Ethylenglykol-dimethylether oder -diethylether, oder dipolar aprotische Lösungsmittel wie Dimethylformamid, Dimethylacetamid, N-Methyl-pyrrolidon, Tetramethylharnstoff, Dimethylsulfoxid oder Tetramethylensulfon.

3) In einem weiteren Verfahren überführt man die Aminoanthrachinone der Formel

$$A—(—NH_2)_m \qquad (II)$$

bei 40-100 °C, vorzugsweise 40-80 °C, in einem gegen die Reaktionspartner inerten organischen Lösungsmittel mit einem Dialkylformamid und einem Thionylhalogenid, insbesondere Thionylchlorid, in die entsprechenden Formamidinium-halogenide der Formel

$$A[—NH—CH = N^{\oplus} (R')_2]_m (X^{\ominus})_m \qquad (X)$$

worin R' vorzugsweise für eine $C_1$-$C_4$-Alkylgruppe und X für Chlor oder Brom steht, und kondensiert die erhaltenen Formamidinium-halogenide (X) in dem gleichen oder einem anderen organischen Lösungsmittel bei 100-220 °C, vorzugsweise 120-180 °C, in Gegenwart eines säurebindenden Mittels mit gegebenenfalls in 5, 6, 7- und/oder 8-Stellung substituierten 2,4-Dihydroxy-chinolinen der oben genannten Formel (VI).

Als organische Lösungsmittel für das Verfahren (3) eignen sich insbesondere aromatische Kohlenwasserstoffe wie Toluol, Chlorbenzol, o-Dichlorbenzol, 1,2,4-Trichlorbenzol, Nitrobenzol, Ether wie Ethylenglykol-dimethylether oder -diethylether oder dipolar aprotische Lösungsmittel wie Dimethylformamid, Diethylformamid, N-Methylpyrrolidon, Dimethylsulfoxid oder Tetramethylensulfon.

Als Dialkylformamide verwendet man vorzugsweise niedere Dialkylformamide wie Dimethyl- oder Diethylformamide, kann aber auch cyclische Alkyl-carbonsäureamide wie N-Methylpyrrolidon einsetzen.

Als säurebindende Mittel verwendet man in dem Verfahren (3) Alkali- oder Erdalkalimetall-hydroxide oder -carbonate oder Alkali- oder Erdalkalimetallsalze aliphatischer Carbonsäuren, vorzugsweise Natrium- oder Kalium-carbonat, -hydrogencarbonat oder -acetat.

Die Verbindungen der Formeln (Ia-d) fallen in einer für die Pigmentanwendung geeigneten Form an oder können durch an sich bekannte Nachbehandlungsverfahren in die geeignete Form übergeführt werden, z. B. durch Lösen oder Quellen in starken anorganischen Säuren wie Schwefelsäure und Austragen auf Eis. Die Feinverteilung kann auch durch Mahlen mit oder ohne Mahlhilfsstoffe wie anorganische Salze oder Sand, gegebenenfalls in Anwesenheit von Lösungsmitteln wie Toluol, Xylol, Dichlorbenzol oder N-Methylpyrrolidon erzielt werden. Farbstärke und Transparenz des Pigmentes können durch Variation der Nachbehandlung beeinflußt werden.

Die Verbindungen der Formeln (Ia-d) eigenen sich aufgrund ihrer Licht- und Migrationsechtheit für die verschiedensten Pigmentapplikationen. Die Pigmente können zur Herstellung von sehr echt pigmentierten Systemen, wie Mischungen mit anderen Stoffen, Zubereitungen, Anstrichmitteln, Druckfarben, gefärbtem Papier und gefärbten makromolekularen Stoffen verwendet werden. Unter Mischung mit anderen Stoffen können z. B. solche mit anorganischen Weißpigmenten wie Titandioxid (Rutil) oder mit Zement verstanden werden. Zubereitungen sind z. B. Flushpasten mit organischen Flüssigkeiten oder Teige und Feinteige mit Wasser, Dispergiermitteln und gegebenenfalls Konservierungsmitteln. Die Bezeichnung Anstrichmittel steht z. B. für physikalisch oder oxidativ trocknende Lacke, Einbrennlacke, Reaktionslacke, Zweikomponentenlacke, Dispersionsfarben für wetterfeste Ueberzüge und Leimfarben. Unter Druckfarben sind solche für den Papier-, Textil- und Blechdruck zu verstehen. Die makromolekularen Stoffe können natürlichen Ursprungs sein wie Kautschuk, durch chemische Modifikation erhalten werden wie Acetylcellulose, Cellulosebutyrat oder Viskose oder synthetisch erzeugt werden wie Polymerisate, Polyadditionsprodukte und Polykondensate. Genannt seien plastische Massen wie Polyvinylchlorid, Polyvinylacetat, Polyvinylpropionat, Polyolefine z. B. Polyethylen oder Polyamide, Superpolyamide, Polymerisate und Mischpolymerisate aus Acrylester, Methacrylester, Acrylnitril, Acrylamid, Butadien, Styrol sowie Polyurethane und Polycarbonate. Die mit den beanspruchten Produkten pigmentierten Stoffe können in beliebiger Form vorliegen.

Die Pigmente der Formeln (Ia-d) sind weiterhin ausgezeichnet wasserrecht, ölecht, säureecht, kalkecht, alkaliecht, lösungsmittelecht, überlackierecht, überspritzecht, sublimierecht, hitzebeständig, vulkanisierbeständig, sehr ergiebig und in plastischen Massen gut verteilbar.

Aus der DE-A-2 728 863 sind Verbindungen bekannt, die sich von den erfindungsgemäßen Verbindungen dadurch unterscheiden, daß sie den Rest eines Benzol-, Benzimidazolon- oder Pyridinsystems an Stelle des Anthrachinonrestes enthalten. Aus der DE-A-2 728 864 sind Verbindungen bekannt, die sich von den erfindungsgemäßen Verbindungen dadurch unterscheiden, daß sie am N-Atom des Chinolonrings substituiert sind und sich von einem Alkylendiamin oder einem Diamin der Benzol- oder heterocyclischen Reihe ableiten. Aus Patent Abstracts of Japan, unexamined applications, Sektion C, Band 1, Nr. 27, 28. März 1977, The Patent Office Japanese Government, S. 1261 C 76 sind Anthrachinonazomethin-barbitursäure-Pigmente bekannt.

Beispiel 1

a) 11 g 97 %iges 1-Amino-anthrachinon, 8,5 g Orthoameisensäure-triethylester und 120 g Nitrobenzol werden etwa 3 Stunden bei 140-145 °C gerührt, wobei man das entstehende Ethanol über eine Brücke abdestilliert und die Bildung des Formiminoesters der Formel

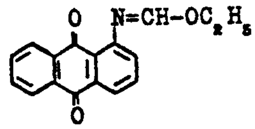

(XI)

dünnschichtchromatographisch verfolgt. Nach Verschwinden des 1-Amino-anthrachinons versetzt man das Reaktionsgemisch mit 8 g 2,4-Dihydroxy-chinolin und erhitzt noch 2-3 Stunden auf 145-150 °C. Darauf läßt man auf 100 °C abkühlen, saugt das in gelben Prismen auskristallisierte Pigment ab, wäscht mit heißem Nitrobenzol und Methanol und trocknet bei 100 °C.

Man erhält so 17,7 g (91 % der Theorie) des rotstichig gelben Pigmentes der Formel

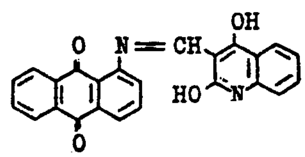

(XII)

$C_{24}H_{14}N_2O_4$ (394)
Berechnet : C 73,1 H 3,55 N 7,11 O 16,24
Gefunden : C 73,3 H 3,6 N 7,2 O 16,5
Das Pigment kann auch in den folgenden tautomeren Strukturen vorliegen :

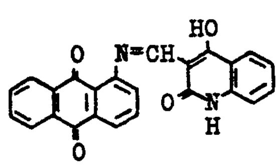

(XIIa)

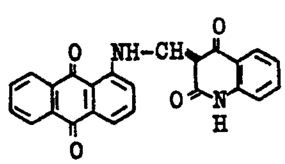

(XIIb)

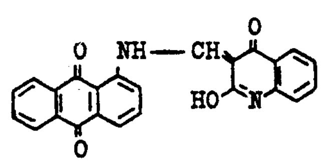

(XIIc)

b) 11 g 97 %iges 1-Amino-anthrachinon, 4 g Dimethylformamid und 90 g Nitrobenzol werden bei 50-60 °C in 1 Stunde mit 7,3 g Thionylchlorid versetzt und bis zur Bildung des Formamidinium-chlorids der Formel

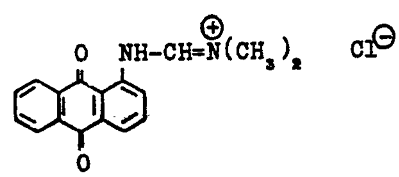

(XIII)

noch etwa 1 Stunde gerührt. Zur Entfernung des überschüssigen Thionylchlorids rührt man noch 1 Stunde im Vakuum nach und versetzt dann das Reaktionsgemisch nacheinander mit 8 g 2,4-Dihydroxy-chinolin und 12,5 g wasserfreiem Natriumacetat und erhitzt in etwa 1 Stunde auf 150-160 °C. Man rührt bis zur Beendigung der Bildung des in gelben Prismen kristallisierten Pigmentes bei 150-160 °C, saugt dann bei 100 °C ab, wäscht mit heißem Nitrobenzol und mit Methanol und Wasser und erhält nach dem Trocknen 17,5 g (90 % d. Theorie) des mit dem aus Beispiel 1a identischen rotstichig gelben Pigmentes.

Unter Verwendung der in der folgenden Tabelle aufgeführten entsprechend in 5, 6, 7- und/oder 8-Stellung substituierten 2,4-Dihydroxy-chinoline der Formel (VIa)

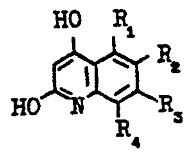

(VIa)

erhält man bei Einsatz von 1-Amino-anthrachinon nach den in Beispiel 1a oder 1b beschriebenen Verfahren der Formel (XII) entsprechende Anthrachinon-Pigmente in gelben Farbtönen :

Tabelle 1

| Beispiel | $R_1$ | $R_2$ | $R_3$ | $R_4$ |
|---|---|---|---|---|
| 2 | H | H | H | Cl |
| 3 | H | H | Br | H |
| 4 | Cl | Cl | Cl | Cl |
| 5 | $CH_3$ | H | H | H |
| 6 | H | $OCH_3$ | H | H |
| 7 | H | $NO_2$ | H | H |
| 8 | H | H | $NO_2$ | H |
| 9 | H | $NH-CO-CH_3$ | H | H |
| 10 | H | H | $NH-CO-C_6H_5$ | H |
| 11 | H | $CO-NH_2$ | H | H |
| 12 | H | CN | H | H |
| 13 | H | H | $SO_2-NH-CH_3$ | H |
| 14 | $CF_3$ | H | H | H |
| 15 | Br | Br | Br | Br |
| 16 | F | H | H | H |

Pigmente mit ausgezeichneten Eigenschaften und ähnlichen Farbtönen erhält man, wenn man in den Beispielen 1-16 anstelle des dort verwandten 1-Amino-anthrachinons folgende 1-Amino-anthrachinon-Derivate einsetzt : 1-Amino-4-chloranthrachinon, 1-Amino-5-chlor-anthrachinon, 1-Amino-6(7)-chlor-anthrachinon, 1-Amino-6.7-dichlor-anthrachinon, 1-Amino-2.4-dibrom-anthrachinon, 1-Amino-6-fluor-anthrachinon, 1-Amino-4-nitro-anthrachinon, 1-Amino-5-nitro-anthrachinon, 1-Amino-anthrachinon-2-carbonsäure-amid, 1-Amino-2-acetyl-anthrachinon.

Beispiel 17

9,8 g 87 %iges 1-Amino-5-benzoylamino-anthrachinon, 4,4 g Orthoameisensäuretriethylester werden in 75 g Nitrobenzol etwa 2-3 Stunden auf 140-150 °C erhitzt, wobei man das entstehende Ethanol über eine kurze Brücke abdestilliert. Nach Verschwinden des Ausgangsmaterials trägt man 4,5 g 2,4-Dihydroxy-chinolin ein und erhitzt weitere 4 Stunden auf 145-150 °C. Nach Abkühlen auf 100 °C saugt man das in gelbstichig roten Nadeln kristallisierte Pigment ab, wäscht mit heißem Nitrobenzol und Methanol und erhält nach dem Trocknen bei 100 °C 13,37 g (91 % d. Theorie) des gelbstichig roten Pigmentes der Formel

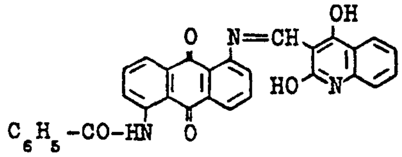

(XIV)

$C_{31}H_{19}N_3O_5$ (513)
Berechnet : C 72,51 H 3,7 N 8,19
Gefunden : C 72,3 H 3,6 N 8,3

Mit dem gleichen Erfolg kann in dem Beispiel anstelle des Orthoameisensäuretriethylesters der Orthoameisensäuretrimethylester eingesetzt werden.

Mit ähnlichen Ausbeuten erhält man das Pigment, wenn man anstelle des Nitrobenzols folgende Lösungsmittel verwendet : o-Dichlorbenzol, 1.2.4-Trichlorbenzol, Diethylenglykolmonoethylether, Diethylenglykoldimethylether, Dimethylformamid, N-Methylpyrrolidon, Dimethylsulfoxid und Tetramethylensulfon.

Beispiel 18

8,5 g 95 %iges 1-Amino-4-benzoylamino-anthrachinon, 4,4 g Orthoameisensäuretriethylester werden in 100 g o-Dichlorbenzol etwa 2-3 Stunden auf 140-150 °C erhitzt, wobei man das entstehende Ethanol über eine kurze Brücke abdestilliert. Nach Verschwinden des Ausgangsmaterials trägt man 4,5 g 2.4-Dihydroxy-chinolin ein und erhitzt weitere 4 Stunden auf 140-150 °C. Nach Abkühlen auf 100 °C saugt man das in schönen blau-roten Nadeln kristallisierte Pigment ab, wäscht mit heißem o-Dichlorbenzol und Methanol und erhält nach dem Trocknen bei 100 °C 13,7 g (93,2 % d. Theorie) des dunkelroten Pigmentes der Formel

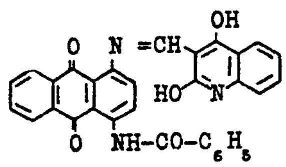

(XV)

$C_{31}H_{19}N_3O_5$ (513)
Berechnet : C 72,51 H 3,7 N 8,19
Gefunden : C 72,2 H 3,5 N 8,3

Pigmente mit ausgezeichneten Eigenschaften und ähnlichen Farbtönen erhält man, wenn man anstelle des oben genannten 1-Amino-4-benzoylamino-anthrachinons das 1-Amino-4-(4-chlorbenzoylamino)-anthrachinon, das 1-Amino-4-(2.4-dichlorbenzoylamino)-anthrachinon, das 1-Amino-4-(3-nitrobenzoylamino)-anthrachinon oder das 1-Amino-4-(4-acetylaminobenzoylamino)-anthrachinon verwendet.

Beispiel 19

11,8 g 1-Amino-4-hydroxy-anthrachinon, 8,5 g Orthoameisensäuretriethylester und 120 g Nitrobenzol werden etwa 3 Stunden bei 140-145 °C gerührt, wobei man das entstehende Ethanol über eine Brücke abdestilliert. Nach Verschwinden des Ausgangsmaterials trägt man 8 g 2.4-Dihydroxy-chinolin ein und erhitzt weitere 4 Stunden auf 140-150 °C. Nach Abkühlen auf 100 °C saugt man das in feinen roten Nadeln kristallisierte Pigment ab, wäscht mit heißem Nitrobenzol und Methanol und erhält nach dem Trocknen bei 100 °C 18 g (89 % d. Theorie) des blaustichig dunkelroten Pigmentes der Formel

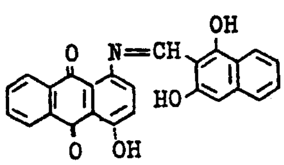

(XVI)

$C_{24}H_{14}N_2O_5$
Berechnet : C 70,24 H 3,41 N 6,83
Gefunden : C 69,9 H 3,45 N 6,95

Beispiel 20

5,5 g 1.5-Diamino-anthrachinon, 8,8 g Orthoameisensäuretriethylester werden in 80 g Nitrobenzol etwa 3 Stunden auf 145-150 °C erhitzt, wobei man das entstehende Ethanol über eine Brücke abdestilliert und das Verschwinden des Ausgangsmaterials dünnschichtchromatographisch verfolgt. Man versetzt nun mit 7,8 g 2.4-Dihydroxy-chinolin und erhitzt so lange auf 140-150 °C, bis die Pigmentbildung beendet ist, was etwa 4 Stunden erfordert. Man saugt darauf das in feinen gelben Nadeln kristallisierte Pigment bei

120 °C ab, wäscht mit heißem Nitrobenzol und Methanol und erhält nach dem Trocknen bei 100 °C 13,2 g (98,5 % d. Theorie) des orangefarbenen Pigmentes der Formel

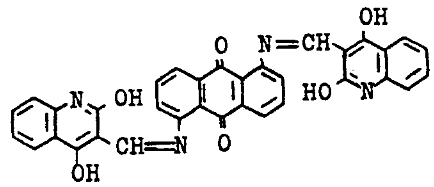

(XVII)

Berechnet : N 9,66
Gefunden : N 9,8

Verwendet man anstelle des oben genannten 1.5-Diamino-anthrachinons in Beispiel 20 5,5 g 1.8-Diamino-anthrachinon, so erhält man 13,04 g (97,3 % d. Theorie) des gelbstichig roten Pigmentes der Formel

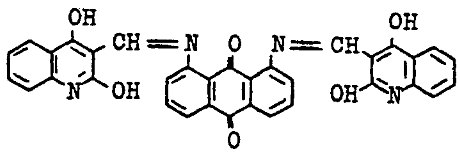

(XVIII)

Berechnet : N 9,66
Gefunden : N 9,6

Setzt man anstelle des oben genannten 1.5-Diamino-anthrachinons in Beispiel 20 5,5 g 1.4-Diamino-anthrachinon ein, so erhält man 12,6 g (94 % d. Theorie) des schwarzbraunen Pigmentes der Formel

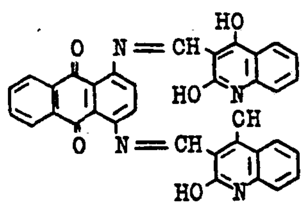

(XIX)

Berechnet : N 9,66
Gefunden : N 9,9

Beispiel 21

6,25 g 1.5-Diamino-4.8-dihydroxy-anthrachinon, 8,8 g Orthoameisensäuretriethylester werden in 100 g Nitrobenzol etwa 3 Stunden auf 145-150 °C erhitzt, wobei man das entstehende Ethanol über eine Brücke abdestilliert und das Verschwinden des Ausgangsmaterials dünnschichtchromatographisch verfolgt. Man versetzt nun mit 7,8 g 2.4-Dihydroxychinolin und erhitzt so lange auf 160-170 °C, bis die Pigmentbildung beendet ist. Man saugt darauf das in graublauen Prismen kristallisierte Pigment bei 120 °C ab, wäscht mit heißem Nitrobenzol und Methanol und erhält nach dem Trocknen bei 100 °C 13,83 g (97,6 % d. Theorie) des blaustichig grauen Pigmentes der Formel

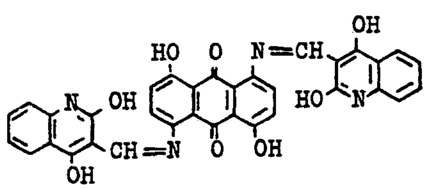

(XX)

Berechnet : N 9,15
Gefunden : N 9,3

Verwendet man in Beispiel 21 anstelle des 1.5-Diamino-4.8-dihydroxy-anthrachinons 6,25 g 1.8-Diamino-4.5-dihydroxy-anthrachinon, so erhält man 12,3 g (94 % d. Theorie) des grünstichig grauen Pigmentes der Formel

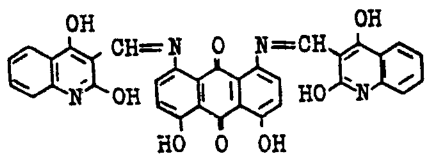

(XXI)

Berechnet : N 9,15
Gefunden : N 9,28

Pigmente mit ausgezeichneten Eigenschaften und ähnlichen Farbtönen erhält man, wenn man in Beispiel 21 anstelle des dort verwandten 1.5-Diamino-4.8-dihydroxy-anthrachinons das 1.5-Diamino-4.8-dihydroxy-x-brom-anthrachinon oder das 1.8-Diamino-4.8-dihydroxy-x-brom-anthrachinon einsetzt.

Beispiel 22

3,4 g 1.4.5.8-Tetraamino-anthrachinon, 9 g Orthoameisensäuretriethylester und 125 g Nitrobenzol werden 3-4 Stunden auf 145-150 °C erhitzt, wobei man das entstehende Ethanol über eine Brücke abdestilliert und das Verschwinden des Ausgangsmaterials dünnschichtchromatographisch verfolgt. Man versetzt nun mi 8,2 g 2.4-Dihydroxy-chinolin und erhitzt so lange auf 175-180 °C, bis die Bildung des Pigmentes in blauschwarzen Prismen beendet ist. Man saugt darauf das Pigment bei 150 °C ab, wäscht mit heißem Nitrobenzol und Methanol und erhält nach dem Trocknen bei 100 °C 11,6 g (96 % d. Theorie) des blaustichig grauen Pigmentes der Formel

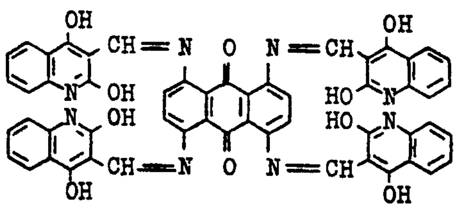

(XXII)

Berechnet : N 11,76
Gefunden : N 12,02

Beispiel 23

13,37 g 1-Amino-4.5.8-trihydroxy-anthrachinon, 8,8 g Orthoameisensäuretriethylester und 80 g Nitrobenzol werden etwa 3 Stunden auf 145-150 °C erhitzt, wobei man das entstehende Ethanol über eine Brücke abdestilliert und das Verschwinden des Ausgangsmaterials dünnschichtchromatographisch verfolgt. Man versetzt nun mit 8 g 2.4-Dihydroxychinolin und erhitzt so lange auf 155-160 °C, bis die Bildung des Pigmentes beendet ist. Nach dem Abkühlen auf 110 °C saugt man das in braunen Prismen kristallisierte Pigment ab, wäscht mit heißem Nitrobenzol und Methanol und erhält nach dem Trocknen bei 100 °C 18 g (87,5 % d. Theorie) des braunen Pigmentes der Formel

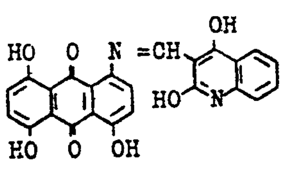

(XXIII)

Berechnet : N 6,33
Gefunden : N 6,57

Verwendet man in Beispiel 23 anstelle von 1-Amino-4.5.8-trihydroxy-anthrachinon äquivalente Mengen der in Tabelle 2 aufgeführten Amino-anthrachinone, so werden entsprechende Pigmente in den dort angegebenen Farbtönen erhalten.

Tabelle 2

| Beispiel | Amino-anthrachinon | Farbton des erhaltenen Pigmentes |
|---|---|---|
| 24 | 1-Amino-5.8-dihydroxy-anthrachinon | blaustichig Rot |
| 25 | 1-Amino-2-brom-4-hydroxy-anthrachinon | Rot |
| 26 | 1-Amino-4-anilino-anthrachinon | rotstichig Grau |

Beispiel 27

a) 8 g des nach Beispiel 1a erhaltenen feinverteilten Pigmentes werden mit einem Einbrennlack aus 25 g Kokosölalkydharz (40 % Kokosöl), 10 g Melaminharz, 50 g Toluol und 7 g Glykolmonomethylether auf einer automatischen Hoover-Muller-Anreibmaschine angerieben. Man trägt die Mischung auf die zu lackierende Unterlage auf, härtet den Lack durch Einbrennen bei 130 °C und erhält rotstichig gelbe Lackierungen sehr guter Ueberlackierechtheit und hervorragender Licht- und Wetterechtheit.

Pigmentierte Einbrennlacke gleicher Echtheiten erhält man, wenn man 15-25 g des angegebenen Alkydharzes oder eines Alkydharzes auf Basis von Baumwollsaatöl, Ricinenöl, Ricinusöl oder synthetischen Fettsäuren verwendet und statt der angegebenen Melaminharzmenge 10-15 g des erwähnten Melaminharzes oder eines Kondensationsproduktes von Formaldehyd mit Harnstoff oder mit Benzoguanamin einsetzt.

b) Reibt man statt der angegebenen Pigmentmenge 1 bis 10 g einer Mischung von Titandioxid (Rutiltyp) mit dem in Beispiel 1a angegebenen Pigment im Verhältnis 0,5-50 : 1 in den im Beispiel 27a angegebenen Lack ein, erhält man bei gleicher Weiterverarbeitung Lackierungen gleicher Echtheiten und mit steigendem Titandioxidgehalt nach weiß verschobenem, rotstichig gelbem Farbton.

Beispiel 28

In 100 g eines Nitrocelluloselackes, der aus 44 g Collodiumwolle (niedrigviskos, 35 %ig, butanolfeucht), 5 g Dibutylphthalat, 40 g Ethylacetat, 20 g Toluol, 4 g n-Butanol und 10 g Glykolmonomethylether besteht, werden 6 g feinverteiltes Pigment gemäß Beispiel 1a eingerieben. Nach Verstreichen und Trocknen erhält man rotstichig gelbe Lackierungen hervorragender Licht- und Ueberlackierechtheit. Zu gleichen Ergebnissen kommt man bei Verwendung von Nitrolacken mit 10-15 g Nitrocellulosegehalt, 5-10 g Weichmachergehalt und 70-85 g Lösungsmittelgemisch unter bevorzugter Verwendung von aliphatischen Estern wie Ethylacetat, Butylacetat und Aromaten wie Toluol und Xylol und kleineren Anteilen aliphatischer Ether wie Glykolether und Alkohole wie Butanol. Unter Weichmachern können z. B. verstanden werden : Phthalsäureester wie Dioctylphthalat, Dibutylphthalat, Ester der Phosphorsäure, Ricinusöl allein oder in Kombination mit ölmodifizierten Alkydharzen.

Lackierungen mit ähnlichen Echtheitseigenschaften erhält man bei Verwendung von anderen physikalisch trocknenden Sprit-, Zapon- und Nitrolacken, von lufttrocknenden Oel-, Kunstharz- und Nitrokombinationslacken, ofen- und lufttrocknenden Epoxidharzlacken, gegebenenfalls in Kombination mit Harnstoff-, Melamin-, Alkyd- oder Phenolharzen.

Beispiel 29

5 g in feine Verteilung gebrachtes Pigment gemäß Beispiel 1a werden in 100 g eines paraffinfrei trocknenden ungesättigten Polyesterharzes in einer Porzellankugelmühle angerieben. Mit der Anreibung werden 10 g Styrol, 59 g Melamin-Formaldehyd-Harz und 1 g einer Paste aus 40 % Cyclohexanonperoxid und 60 % Dibutylphthalat gut verrührt und schließlich 4 g Trocknerlösung (10 %iges Kobaltnaphthenat in Testbenzin) und 1 g Siliconöllösung (1 %ig in Xylol) beigemischt. Man trägt die Mischung auf grundiertes Holz auf und erhält eine hochglänzende, wasserfeste und wetterechte rotstichig gelbe Lackierung von hervorragender Lichtechtheit.

Verwendet man statt des Reaktionslackes auf Basis ungesättigter Polyesterharze aminhärtende Epoxidharzlacke mit Dipropylendiamin als Aminokomponente, erhält man rotstichig gelbe Lackierungen hervorragender Wetter- und Ausblühechtheit.

Beispiel 30

100 g einer 65 %igen Lösung eines aliphatischen Polyesters mit ca. 8 % freien Hydroxylgruppen in Glykolmonomethyletheracetat werden mit 5 g des nach Beispiel 1a erhaltenen Pigmentes angerieben

und sodann mit 44 g einer 67 %igen Lösung des Umsetzungsproduktes von 1 Mol Trimethylolpropan mit 3 Mol Toluylen-diisocyanat gut vermischt. Ohne Beeinträchtigung der Topfzeit ergeben sich nach Auftragen des Gemisches und Reaktion der Komponenten hochglänzende rotstichig gelbe Polyurethanlackierungen hervorragender Ausblüh-, Licht- und Wetterechtheit.

Pigmentierungen ähnlicher Echtheit erhält man bei Anwendung anderer Zweikomponentenlacke auf Basis von aromatischen oder aliphatischen Isocyanaten und hydroxylgruppenhaltigen Polyethern oder Polyestern, sowie mit feuchtigkeitstrocknenden, Polyharnstofflackierungen ergebenden Polyisocyanatlacken.

Beispiel 31

5 g eines Feinteiges, erhalten durch Kneten von 50 g des nach Beispiel 1a erhaltenen Pigmentes mit 15 g eines Arylpolyglykolether-Emulgators und 35 g Wasser werden mit 10 g Schwerspat als Füllstoff, 10 g Titandioxid (Rutiltyp) als Weißpigment und 40 g einer wäßrigen Dispersionsfarbe, enthaltend ca. 50 % Polyvinylacetat, gemischt. Man verstreicht die Farbe und erhält nach Trocknen rotstichig gelbe Anstriche sehr guter Kalk- und Zementechtheit sowie hervorragender Wetter- und Lichtechtheit.

Der durch Kneten erhaltene Feinteig eignet sich gleichermaßen zum Pigmentieren klarer Polyvinylacetat-Dispersionsfarben, für Dispersionsfarben, die Mischpolymerisate aus Styrol und Maleinsäuren als Bindemittel enthalten, sowie Dispersionsfarben auf Basis von Polyvinylpropionat, Polymethacrylat oder Butadienstyrol.

Beispiel 32

10 g des in Beispiel 31 erwähnten Pigment-Teiges werden mit einer Mischung aus 5 g Kreide und 5 g 20 %iger Leimlösung vermischt. Man erhält eine rotstichig gelbe Tapetenstreichfarbe, mit der man Ueberzüge hervorragender Lichtechtheit erzielt. Zur Herstellung des Pigment-Teiges können auch andere nicht ionogene Emulgatoren wie die Umsetzungsprodukte von Nonylphenyol mit Ethylenoxid oder ionogene Netzmittel, wie die Natriumsalze von Alkylarylsulfonsäuren, z. B. der Dinaphthylmethandisulfonsäure, Natriumsalze von substituierten Sulfonsäureestern und Natriumsalze von Paraffinsulfonsäuren in Kombination mit Alkylpolyglykolethern verwendet werden.

Beispiel 33

Eine Mischung aus 65 g Polyvinylchlorid, 35 g Diisooctylphthalat, 2 g Dibutylzinnmercaptid, 0,5 g Titandioxid und 0,5 g des Pigmentes von Beispiel 1a wird auf einem Mischwalzwerk bei 165 °C eingefärbt. Man erhält eine intensiv rotstichig gelb gefärbte Masse, die zur Herstellung von Folien oder Formkörpern dienen kann. Die Färbung zeichnet sich durch hervorragende Licht- und sehr gute Weichmacherechtheit aus.

Beispiel 34

0,2 g Pigment nach Beispiel 1a werden mit 100 g Polyethylen-, Polypropylen- oder Polystyrolgranulat gemischt. Die Mischung kann entweder bei 220 bis 280 °C direkt in einer Spritzgußmaschine verspritzt, oder in einer Strangpresse zu gefärbten Stäben bzw. auf dem Mischwalzwerk zu gefärbten Fellen verarbeitet werden. Die Stäbe bzw. Felle werden gegebenenfalls granuliert und in einer Spritzgußmaschine verspritzt.

Die rotstichig gelben Formlinge besitzen sehr gute Licht- und Migrationsechtheit. In ähnlicher Weise können bei 280-300 °C, gegebenenfalls unter Stickstoffatmosphäre, synthetische Polyamide aus Caprolactam oder Adipinsäure und Hexamethylendiamin oder die Kondensate aus Terephthalsäure und Ethylenglykol gefärbt werden.

Beispiel 35

1 g Pigment nach Beispiel 1a, 10 g Titandioxid (Rutiltyp) und 100 g eines in Pulverform vorliegenden Mischpolymerisates auf Basis von Acrylnitril-Butadien-Styrol werden gemischt und auf einem Walzwerk bei 140-180 °C eingefärbt. Man erhält ein rotstichig gelb gefärbtes Fell, das granuliert und in einer Spritzgußmaschine bei 200-250 °C verspritzt wird. Man erhält rotstichig gelbe Formlinge sehr guter Licht- und Migrationsechtheit sowie ausgezeichneter Hitzebeständigkeit.

Auf ähnliche Weise, jedoch bei Temperaturen von 180-220 °C und ohne Zusatz von Titandioxid werden Kunststoffe auf Basis von Celluloseacetat, Cellulosebutyrat und deren Gemische mit ähnlichen Echtheiten gefärbt.

Beispiel 36

0,2 g Pigment nach Beispiel 1a werden in feinverteilter Form mit 100 g eines Kunststoffes auf

Polycarbonat-Basis in einem Extruder oder in einer Knetschnecke bei 250-280 °C gemischt und zu Granulat verarbeitet. Man erhält ein rotstichig gelbes, transparentes Granulat hervorragender Lichtechtheit und Hitzebeständigkeit.

Beispiel 37

90 g eines schwach verzweigten Polypropylenglykols mit einem Molekulargewicht von 2 500 und einer Hydroxylzahl von 56, 0,25 g Endoethylenpiperazin, 0,3 g Zinn-(II)-octoat, 1,0 g eines Polyethersiloxans, 3,5 g Wasser, 12,0 g einer Anreibung von 10 g Pigment nach Beispiel 1a in 50 g des angegebenen Polypropylenglykols werden gut miteinander gemischt und anschließend mit 45 g Toluylendiisocyanat (80 % 2.4- und 20 % 2.6-Isomeres) innig gemischt und in eine Form gegossen. Die Mischung trübt sich nach 6 Sekunden und die Schaumstoffbildung erfolgt. Nach 70 Sekunden hat sich ein intensiv rotstichig gelb gefärbter, weicher Polyurethanschaumstoff gebildet, dessen Pigmentierung hervorragende Lichtechtheit aufweist.

Beispiel 38

90 g eines schwach verzweigten Polyesters aus Adipinsäure, Diethylenglykol und Trimethylolpropan mit einem Molekulargewicht von 2 000 und einer Hydroxylzahl von 60 werden mit folgenden Komponenten vermischt : 1,2 g Dimethylbenzylamin, 2,5 g Natrium-Ricinusölsulfat, 2,0 g eines oxethylierten, benzylierten Oxidiphenyls, 1,75 g Wasser, 12 g einer Paste, hergestellt durch Anreiben von 10 g des Pigmentes nach Beispiel 1a in 50 g des oben angegebenen Polyesters. Nach der Mischung werden unter Rühren 40 g Toluylendiisocyanat (65 % 2.4- und 35 % 2.6-Isomeres) eingerührt und die Mischung in eine Form gegossen und verschäumt. Nach 60 Sekunden hat sich rotstichig gelb gefärbter, weicher Polyurethanschaumstoff gebildet, dessen Einfärbung sich durch sehr gute Lichtechtheiten auszeichnet.

Beispiel 39

Mit einer Druckfarbe, hergestellt durch Anreiben von 35 g Pigment nach Beispiel 1a und 65 g Leinöl und Zugabe von 1 g Siccativ (Co-Naphthenat, 50 %ig in Testbenzin) werden rotstichig gelbe Offset-Drucke hoher Billanz und Farbstärke und sehr guter Licht- und Lackierechtheit erhalten. Verwendung dieser Druckfarbe in Buch-, Licht-, Stein- oder Stahlstichdruck führt zu rotstichig gelben Drucken ähnlicher Echtheiten. Verwendet man das Pigment zur Färbung von Blechdruck- oder niedrigviskosen Tiefdruckfarben oder Drucktinten, erhält man rotstichig gelbe Drucke ähnlicher Echtheiten.

Beispiel 40

Aus 10 g des in Beispiel 31 angegebenen Pigment-Feinteiges, 100 g Traganth 3 %ig, 100 g einer wäßrigen 50 %igen Eialbuminlösung und 25 g eines nichtionogenen Netzmittels wird eine Druckpaste bereitet. Man bedruckt ein Textilfasergewebe, dämpft bei 100 °C und erhält einen rotstichig gelben Druck, der sich durch vorzügliche Echtheiten, insbesondere Lichtechtheiten auszeichnet. Im Druckansatz können anstelle des Traganths und Eialbumins weitere, für das Fixieren auf der Faser verwendbare Bindemittel, beispielsweise solche auf Kunstharzbasis, Britshgum oder Celluloseglykolat verwendet werden.

Beispiel 41

Eine Mischung aus 100 g Crepe hell, 2,6 g Schwefel, 1 g Stearinsäure, 1 g Mercaptobenzthiazol, 0,2 g Hexamethylentetramin, 5 g Zinkoxid, 60 g Kreide und 2 g Titandioxid (Anatastyp) wird auf einem Mischwalzwerk bei 50 °C und mit 2 g des nach Beispiel 1a erhaltenen Pigmentes eingefärbt und dann 12 Minuten bei 140 °C vulkanisiert. Man erhält ein rotstichig gelb gefärbtes Vulkanisat sehr guter Lichtechtheit.

Beispiel 42

100 g einer 20 %igen wäßrigen Paste des Pigmentes nach Beispiel 1a, beispielsweise hergestellt durch Auflösen des Farbstoffes in 96 %iger Schwefelsäure, Austragen auf Eis, Filtrieren und Neutralwaschen mit Wasser, werden 22,5 l einer wäßrigen, ungefähr 9 %igen Viskoselösung im Rührwerk zugesetzt. Die gefärbte Masse wird 15 Minuten gerührt, anschließend entlüftet und einem Spinn- und Entschwefelungsprozeß unterworfen. Man erhält gelbstichig rote Fäden oder Folien mit sehr guter Lichtechtheit.

Beispiel 43

10 kg einer Papiermasse, enthaltend auf 100 g 4 g Cellulose, werden im Holländer während etwa 2

Stunden behandelt. Während dieser Zeit gibt man in je viertelstündigen Abständen 4 g Harzleim, dann 30 g einer etwa 15 %igen Pigmentdispersion, erhalten durch Mahlen von 4,8 g des nach Beispiel 1a erhaltenen Pigmentes mit 4,8 g Dinaphthylmethandisulfonsäure und 22 g Wasser in der Kugelmühle, sodann 5 g Aluminiumsulfat zu.

Nach Fertigstellung auf der Papiermaschine erhält man ein rotstichig gelb gefärbtes Papier von hervorragender Lichtechtheit.

Beispiel 44

Das nach Beispiel 43 hergestellte gelb pigmentierte Papier wird mit der 55 %igen Lösung eines Harnstoff-Formaldehyd-Harzes in n-Butanol getränkt und bei 140 °C eingebrannt. Man erhält ein rotstichig gelbes Laminatpapier von sehr guter Migrations- und hervorragender Lichtechtheit.

Ein Laminatpapier gleicher Echtheit erhält man durch Laminieren eines Papieres, das im Tiefdruckverfahren mit einer Druckfarbe bedruckt wurde, die den in Beispiel 31 angegebenen, gelben Pigmentfeinteig und wasserlösliche bzw. verseifbare Bindemittel enthält.

Beispiel 45

20 g des gemäß Beispiel 1a erhaltenen Pigmentes werden in 50 g Dimethylformamid unter Verwendung eines Dispergierhilfsmittels, bestehend aus 50 g einer 10 %igen Lösung von Polyacrylnitril in Dimethylformamid, in einer Perlmühle fein dispergiert. Das so erhaltene Pigmentkonzentrat wird in bekannter Weise zu Spinnlösung von Polyacrylnitril gegeben, homogenisiert und dann zu Filamenten nach bekannten Trocken- oder Naß-Spinnverfahren versponnen.

Man erhält rotstichig gelb gefärbte Filamente, deren Färbungen sich durch sehr gute Reib-, Wasch-, Migrations-, Hitze-, Licht- und Wetterechtheiten auszeichnen.

**Ansprüche**

1. Anthrachinon-Derivate, die in einer ihrer tautomeren Strukturen der Formel

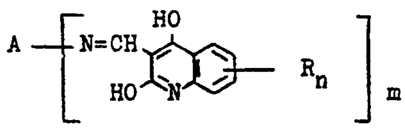

(Ia)

entsprechen, in der

A einen von Sulfonsäuregruppen freien, gegebenenfalls weitersubstituierten Anthrachinonrest, der vorzugsweise aus höchstens 5 kondensierten Ringen besteht,

m eine Zahl von 1-4, vorzugsweise 1 oder 2,

R einen Substituenten und

n 0, 1, 2, 3 oder 4 bedeuten.

2. Anthrachinon-Derivate gemäß Anspruch 1 der tautomeren Formel

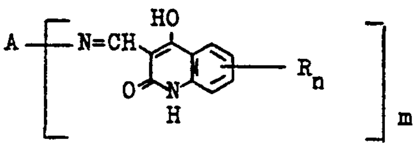

(Ib)

oder der tautomeren Formel

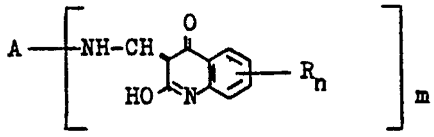

(Ic)

oder der tautomeren Formel

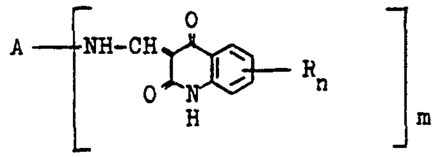

(Id)

3. Anthrachinon-Derivate der Formel

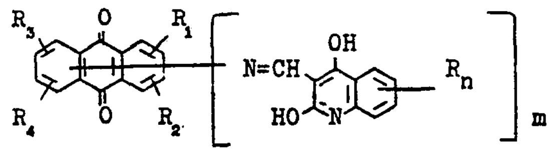

(III)

oder der entsprechenden tautomeren Formel
worin

R, n und m die in Anspruch 1 angegebene Bedeutung haben und

$R_1$ Wasserstoff, Halogen wie Fluor, Chlor und Brom, Nitro, $C_1$-$C_4$-Alkyl, $C_1$-$C_4$-Alkoxy, $C_1$-$C_4$-Alkylamino, Benzylamino, Cyclohexylamino, $C_1$-$C_4$-Alkylmercapto, gegebenenfalls durch $C_1$-$C_4$-Alkyl, $C_1$-$C_4$-Alkoxy, Fluor, Chlor, Brom oder Nitro substituiertes Phenylmercapto, $C_1$-$C_4$-Alkylcarbonyl, $C_1$-$C_4$-Alkoxycarbonyl, gegebenenfalls durch $C_1$-$C_4$-Alkyl, $C_1$-$C_4$-Alkoxy, Chlor oder Nitro substituiertes Phenylamino, gegebenenfalls durch $C_1$-$C_4$-Alkyl, Benzyl oder Phenyl mono- oder disubstituiertes Carbamoyl, wobei Phenyl durch $C_1$-$C_4$-Alkyl, $C_1$-$C_4$-Alkoxy, Fluor, Chlor, Brom oder Nitro substituiert sein kann, Carboxy, Hydroxy, $C_1$-$C_4$-Alkylcarbonylamino oder gegebenenfalls durch $C_1$-$C_4$-Alkyl, $C_1$-$C_4$-Alkoxy, Chlor, Brom oder Nitro substituiertes Benzoylamino, gegebenenfalls durch $C_1$-$C_4$-Alkyl, $C_1$-$C_4$-Alkoxy, Fluor, Chlor, Brom oder Nitro substituiertes Phenylsulfonylamino,

$R_2$ Wasserstoff, Chlor oder Hydroxy,

$R_3$ Wasserstoff, Halogen wie Fluor, Chlor oder Brom, Nitro, $C_1$-$C_4$-Alkyl, $C_1$-$C_4$-Alkoxy, $C_1$-$C_4$-Alkylamino, $C_1$-$C_4$-Alkylmercapto, gegebenenfalls durch $C_1$-$C_4$-Alkyl, $C_1$-$C_4$-Alkoxy, Fluor, Chlor, Brom oder Nitro substituiertes Phenylmercapto, $C_1$-$C_4$-Alkoxycarbonyl, $C_1$-$C_4$-Alkylcarbonyl, Benzylamino, Cyclohexylamino, gegebenenfalls durch $C_1$-$C_4$-Alkyl, $C_1$-$C_4$-Alkoxy, Chlor, Brom oder Nitro substituiertes Phenylamino, Carboxy, Hydroxy, gegebenenfalls durch $C_1$-$C_4$-Alkyl, Benzyl oder Phenyl mono- oder disubstituiertes Carbamoyl, wobei Phenyl durch $C_1$-$C_4$-Alkyl, $C_1$-$C_4$-Alkoxy, Fluor, Chlor, Brom oder Nitro substituiert sein kann, $C_1$-$C_4$-Alkylcarbonylamino, gegebenenfalls durch $C_1$-$C_4$-Alkyl, $C_1$-$C_4$-Alkoxy, Chlor, Brom oder Nitro substituiertes Benzoylamino, $C_1$-$C_4$-Alkylsulfonylamino oder gegebenenfalls durch $C_1$-$C_4$-Alkyl, $C_1$-$C_4$-Alkoxy, Fluor, Chlor, Brom oder Nitro substituiertes Phenylsulfonylamino und

$R_4$ Wasserstoff, Halogen wie Fluor, Chlor und Brom oder Hydroxy bedeuten.

4. Anthrachinon-Derivate der Formel

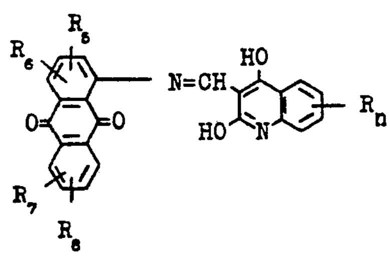

(III)

oder der entsprechenden tautomeren Formel.
worin R und n die in Anspruch 1 angegebene Bedeutung haben und $R_5$, $R_6$, $R_7$ und $R_8$ Wasserstoff, Chlor, Brom, Carboxy, $C_1$-$C_4$-Alkoxycarbonyl, Carbamoyl, $C_1$-$C_4$-Alkylcarbonylamino, gegebenenfalls durch 1 oder 2 Nitro oder 1 bis 5 Chlor oder Brom substituiertes Benzoylamino, $C_1$-$C_4$-Alkylsulfonylamino oder gegebenenfalls durch Methyl, Methoxy oder Chlor substituiertes Phenylsulfonylamino oder einen Rest der Formel

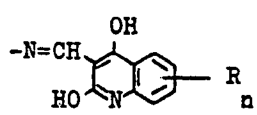

(IV)

bedeuten.

5. Verfahren zur Herstellung von Anthrachinon-Derivaten, dadurch gekennzeichnet, daß man Amino-anthrachinone der Formel

$$A—(—NH_2)_m \qquad (II)$$

in der A und m die in Anspruch 1 genannte Bedeutung besitzen, mit 4-Hydroxy-3-alkoxymethylen-2-oxo-2.3-dihydro-chinolinen der Formel

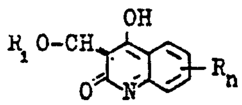

(VIII)

in der $R_1$ vorzugsweise für eine $C_1$-$C_4$-Alkylgruppe steht und R und n die in Anspruch 1 genannte Bedeutung besitzen, in einem organischen Reaktionsmedium bei 100-220 °C, vorzugsweise 120-180 °C kondensiert.

6. Verfahren zur Herstellung von Anthrachinon-Derivaten, dadurch gekennzeichnet, daß man Formiminoester von Amino-anthrachinonen der Formel

$$A—(—N = CH—OR')_m \qquad (VI)$$

in der A und m die in Anspruch 1 genannte Bedeutung besitzen und R' vorzugsweise für eine $C_1$-$C_4$-Alkylgruppe steht, mit 2.4-Dihydroxy-chinolinen der Formel

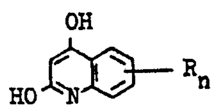

(VI)

in der R und n die in Anspruch 1 genannte Bedeutung besitzen, in einem organischen Reaktionsmedium bei 100-220 °C, vorzugsweise 120-180 °C, kondensiert.

7. Verfahren zur Herstellung von Anthrachinon-Derivaten gemäß Anspruch 1, dadurch gekennzeichnet, daß man Formamidiniumhalogenide der Formel

$$A—[NH—CH = N^{\oplus} (R')_2]_m (X^{\ominus})_m \qquad (X)$$

in der A und m die in Anspruch 1 genannte Bedeutung besitzen, R' vorzugsweise für eine $C_1$-$C_4$-Alkylgruppe und $X^{\ominus}$ für Chlor oder Brom steht, mit 2,4-Dihydroxy-chinolinen der Formel

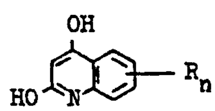

(VI)

in der R und n die in Anspruch 1 genannte Bedeutung besitzen, in einem organischen Lösungsmittel bei 100-220 °C, vorzugsweise 120-180 °C, in Gegenwart eines säurebindenden Mittels kondensiert.

8. Verfahren zum Pigmentieren organischer makromolekularer Stoffe, dadurch gekennzeichnet, daß man Anthrachinon-Derivate gemäß den Ansprüchen 1 bis 4 verwendet.

9. Mit den Anthrachinon-Derivaten der Ansprüche 1 bis 4 pigmentiertes organisches makromolekulares Material.

**Claims**

1. Anthraquinone derivatives which, in one of their tautomeric structures, correspond to the formula

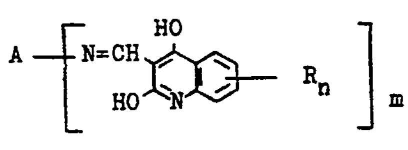

(Ia)

in which

A denotes an anthraquinone radical which is free from sulphonic acid groups, is optionally further substituted and preferably consists of at most 5 fused rings,

m denotes a number from 1 to 4, preferably 1 or 2,

R denotes a substituent and

n denotes 0, 1, 2, 3 or 4.

2. Anthraquinone derivatives according to Claim 1, of the tautomeric formula

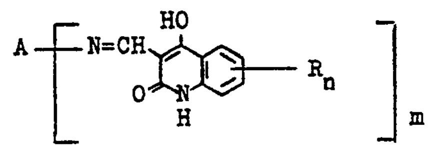

(Ib)

or of the tautomeric formula

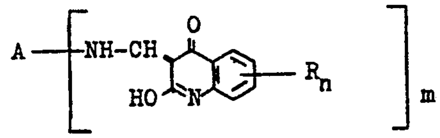

(Ic)

or of the tautomeric formula

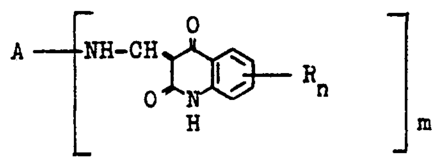

(Id)

3. Anthraquinone derivatives of the formula

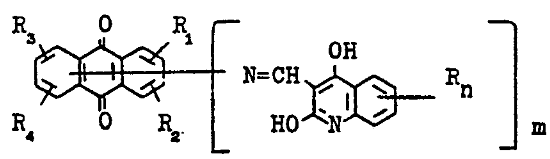

(III)

or of the corresponding tautomeric formula,
wherein

R, n and m have the meaning indicated in Claim 1,

$R_1$ denotes hydrogen, halogen, such as fluorine, chlorine and bromine, nitro, $C_1$-$C_4$-alkyl, $C_1$-$C_4$-alkoxy, $C_1$-$C_4$-alkylamino, benzylamino, cyclohexylamino, $C_1$-$C_4$-alkylmercapto, phenylmercapto which is optionally substituted by $C_1$-$C_4$-alkyl, $C_1$-$C_4$-alkoxy, fluorine, chlorine, bromine or nitro, $C_1$-$C_4$-alkylcarbonyl, $C_1$-$C_4$-alkoxycarbonyl, phenylamino which is optionally substituted by $C_1$-$C_4$-alkyl, $C_1$-$C_4$-alkoxy, chlorine or nitro, carbamoyl which is optionally monosubstituted or disubstituted by $C_1$-$C_4$-alkyl, benzyl or phenyl, it being possible for phenyl to be substituted by $C_1$-$C_4$-alkyl, $C_1$-$C_4$-alkoxy, fluorine, chlorine, bromine or nitro, carboxyl, hydroxyl, $C_1$-$C_4$-alkylcarbonylamino, benzoylamino which is optionally substituted by $C_1$-$C_4$-alkyl, $C_1$-$C_4$-alkoxy, chlorine, bromine or nitro, or phenylsulphonylamino which is optionally substituted by $C_1$-$C_4$-alkyl, $C_1$-$C_4$-alkoxy, fluorine, chlorine, bromine or nitro,

$R_2$ denotes hydrogen, chlorine or hydroxyl,

$R_3$ denotes hydrogen, halogen, such as fluorine, chlorine or bromine, nitro, $C_1$-$C_4$-alkyl, $C_1$-$C_4$-alkoxy, $C_1$-$C_4$-alkylamino, $C_1$-$C_4$-alkylmercapto, phenylmercapto which is optionally substituted by $C_1$-$C_4$-alkyl, $C_1$-$C_4$-alkoxy, fluorine, chlorine, bromine or nitro, $C_1$-$C_4$-alkoxycarbonyl, $C_1$-$C_4$-alkylcarbonyl, benzylamino, cyclohexylamino, phenylamino which is optionally substituted by $C_1$-$C_4$-alkyl, $C_1$-$C_4$-alkoxy, chlorine, bromine or nitro, carboxyl, hydroxyl, carbamoyl which is optionally monosubstituted or disubstituted by $C_1$-$C_4$-alkyl, benzyl or phenyl, it being possible for phenyl to be substituted by $C_1$-$C_4$-alkyl, $C_1$-$C_4$-alkoxy, fluorine, chlorine, bromine or nitro, $C_1$-$C_4$-alkylcarbonylamino, benzoylamino which is optionally substituted by $C_1$-$C_4$-alkyl, $C_1$-$C_4$-alkoxy, chlorine, bromine or nitro, $C_1$-$C_4$-alkylsul-

phonylamino, or phenylsulphonylamino which is optionally substituted by $C_1$-$C_4$-alkyl, $C_1$-$C_4$-alkoxy, fluorine, chlorine, bromine or nitro and

$R_4$ denotes hydrogen, halogen, such as fluorine, chlorine and bromine, or hydroxyl.

4. Anthraquinone derivatives of the formula

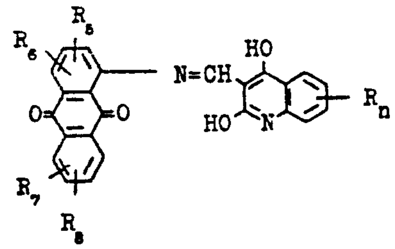

(III)

or of the corresponding tautomeric formula,
wherein R and n have the meaning indicated in Claim 1 and $R_5$, $R_6$, $R_7$ and $R_8$ denote hydrogen, chlorine, bromine, carboxyl, $C_1$-$C_4$-alkoxycarbonyl, carbamoyl, $C_1$-$C_4$-alkylcarbonylamino, benzoylamino which is optionally substituted by 1 or 2 nitro groups or 1 to 5 chlorine or bromine atoms, $C_1$-$C_4$-alkylsulphonylamino, phenylsulphonylamino which is optionally substituted by methyl, methoxy or chlorine, or a radical of the formula

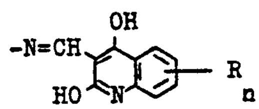

(IV)

5. Process for the preparation of anthraquinone derivatives, characterised in that aminoanthraquinones of the formula

$$A-(-NH_2)_m \qquad (II)$$

in which A and m have the meaning given in Claim 1, are subjected to a condensation reaction with 4-hydroxy-3-alkoxymethylene-2-oxo-2,3-dihydro-quinolines of the formula

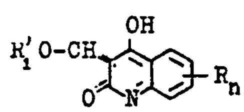

(VIII)

in which $R_1$ preferably represents a $C_1$-$C_4$-alkyl group and R and n have the meaning given in Claim 1, at 100-220 °C, preferably 120-180 °C, in an organic reaction medium.

6. Process for the preparation of anthraquinone derivatives, characterised in that formimino-esters of aminoanthraquinones, of the formula

$$A-(-N=CH-OR')_m \qquad (VI)$$

in which A and m have the meaning given in Claim 1 and R' preferably represents a $C_1$-$C_4$-alkyl group, are subjected to a condensation reaction with 2,4-dihydroxy-quinolines of the formula

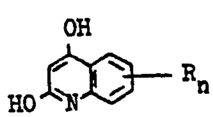

(VI)

in which R and n have the meaning given in Claim 1, at 100-220 °C, preferably 120-180 °C, in an organic reaction medium.

7. Process for the preparation of anthraquinone derivatives according to Claim 1, characterised in that formamidinium halides of the formula

$$A—[NH—CH = N^{\oplus} (R')_2]_m (X^{\ominus})_m \qquad (X)$$

in which A and m have the meaning given in Claim 1, R' preferably represents a $C_1$-$C_4$-alkyl group, and $X^{\ominus}$ represents chlorine or bromine, are subjected to a condensation reaction with 2,4-dihydroxyquinolines of the formula

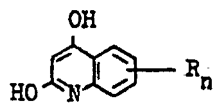

(VI)

in which R and n have the meaning given in Claim 1, at 100-220 °C, preferably 120-180 °C, in an organic solvent in the presence of an acid-binding agent.

8. Process for pigmenting organic macromolecular substances, characterised in that anthraquinone derivatives according to Claims 1 to 4 are used.

9. Organic macromolecular material pigmented with the anthraquinone derivatives of Claims 1 to 4.

**Revendications**

1. Dérivés d'anthraquinones qui, sous l'une de leurs structures tautomères, répondent à la formule

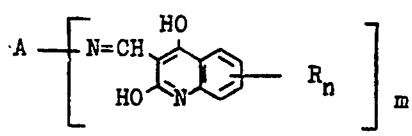

(Ia)

dans laquelle

A est un reste d'anthraquinone dépourvu de groupes acide sulfonique, éventuellement encore substitué, qui est formé de préférence au maximum de 5 noyaux condensés,

m est un nombre de 1 à 4, de préférence 1 ou 2,

R est un substituant et

n est égal à 0, 1, 2, 3 ou 4.

2. Dérivés d'anthraquinones suivant la revendication 1, de la formule tautomère

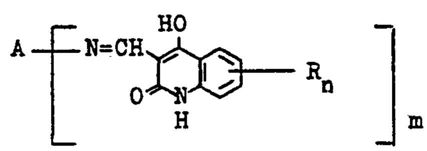

(Ib)

ou de la formule tautomère

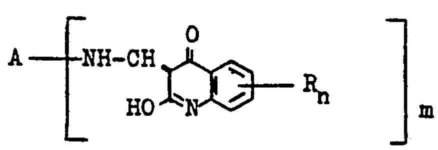

(Ic)

ou de la formule tautomère

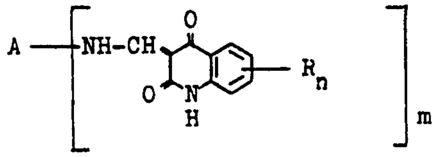

(Id)

3. Dérivés d'anthraquinone de formule

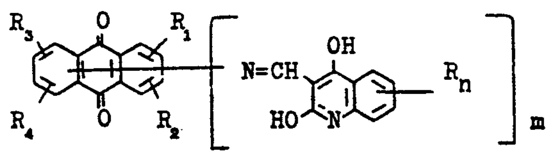

(III)

ou de la formule tautomère correspondante, dans laquelle

R, n et m ont la définition indiquée dans la revendication 1 et

$R_1$ est l'hydrogène, un halogène, tel que fluor, chlore et brome, un groupe nitro, alkyle en $C_1$ à $C_4$, alkoxy en $C_1$ à $C_4$, alkylamino en $C_1$ à $C_4$, benzylamino, cyclohexylamino, alkylmercapto en $C_1$ à $C_4$, phénylmercapto éventuellement substitué par un radical alkyle en $C_1$ à $C_4$, alkoxy en $C_1$ à $C_4$, du fluor, du chlore, du brome ou un radical nitro, un groupe (alkyle en $C_1$ à $C_4$)-carbonyle, (alkoxy en $C_1$ à $C_4$)carbonyle, phénylamino éventuellement substitué par un radical alkyle en $C_1$ à $C_4$, alkoxy en $C_1$ à $C_4$, chloro ou nitro, un groupe carbamoyle éventuellement mono- ou disubstitué par un radical alkyle en $C_1$ à $C_4$, benzyle ou phényle, le radical phényle pouvant être substitué par un radical alkyle en $C_1$ à $C_4$, alkoxy en $C_1$ à $C_4$, du fluor, du chlore, du brome ou un radical nitro, un groupe carboxy, hydroxy, (alkyle en $C_1$ à $C_4$)carbonylamino ou un groupe benzoylamino éventuellement substitué par un radical alkyle en $C_1$ à $C_4$, alkoxy en $C_1$ à $C_4$, du chlore, du brome ou un radical nitro, un groupe phényl-sulfonylamino éventuellement substitué par un radical alkyle en $C_1$ à $C_4$, alkoxy en $C_1$ à $C_4$, du fluor, du chlore, du brome ou un radical nitro

$R_2$ est l'hydrogène, le chlore ou un groupe hydroxy,

$R_3$ est l'hydrogène, un halogène tel que le fluor, le chlore ou le brome, un groupe nitro, alkyle en $C_1$ à $C_4$, alkoxy en $C_1$ à $C_4$, alkylamino en $C_1$ à $C_4$, alkylmercapto en $C_1$ à $C_4$, phénylmercapto éventuellement substitué par un radical alkyle en $C_1$ à $C_4$, alkoxy en $C_1$ à $C_4$, du fluor, du chlore, du brome ou un radical nitro, (alkoxy en $C_1$ à $C_4$)-carbonyle, (alkyle en $C_1$ à $C_4$)-carbonyle, benzylamino, cyclohexylamino, phénylamino éventuellement substitué par un radical alkyle en $C_1$ à $C_4$, alkoxy en $C_1$ à $C_4$, du chlore, du brome ou un radical nitro, carboxy, hydroxy, carbamoyle éventuellement mono- ou disubstitué par un radical alkyle en $C_1$ à $C_4$, benzyle ou phényle, le radical phényle pouvant être substitué par un radical alkyle en $C_1$ à $C_4$, alkoxy en $C_1$ à $C_4$, fluoro, chloro, bromo ou nitro, (alkyle en $C_1$ à $C_4$)carbonylamino, benzoylamino éventuellement substitué par un radical alkyle en $C_1$ à $C_4$, alkoxy en $C_1$ à $C_4$, du chlore, du brome ou un radical nitro, (alkyle en $C_1$ à $C_4$)-sulfonylamino ou phénylsulfonylamino éventuellement substitué par un radical alkyle en $C_1$ à $C_4$, alkoxy en $C_1$ à $C_4$, fluoro, chloro, bromo ou nitro et

$R_4$ est l'hydrogène, un halogène tel que le fluor, le chlore et le brome ou un groupe hydroxy.

4. Dérivés d'anthraquinones de formule

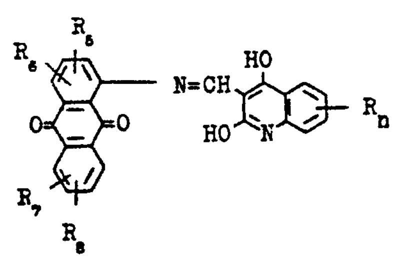

(III)

ou de la formule tautomère correspondante, formule dans laquelle R et n ont la définition indiquée dans la revendication 1 et $R_5$, $R_6$, $R_7$ et $R_8$ représentent de l'hydrogène, du chlore, du brome, ou un groupe carboxy, (alkoxy en $C_1$ à $C_4$)-carbonyle, carbamoyle, (alkyle en $C_1$ à $C_4$)-carbonylamino, benzoylamino éventuellement substitué par un ou deux radicaux nitro ou 1 à 5 atomes de chlore ou de brome, (alkyle en $C_1$ à $C_4$)-sulfonylamino ou phénylsulfonylamino éventuellement substitué par un radical méthyle, méthoxy ou chloro, ou un reste de formule

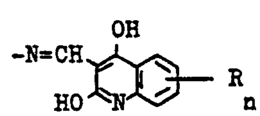

(IV)

5. Procédé de production de dérivés d'anthraquinone, caractérisé en ce qu'on condense des amino-anthraquinones de formule

$$A\text{—}(\text{—}NH_2)_m \qquad (II)$$

dans laquelle A et m ont la définition indiquée dans la revendication 1, avec des 4-hydroxy-3-alkoxyméthylène-2-oxo-2.3-dihydroquinoléines de formule

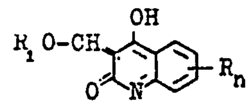

(VIII)

dans laquelle $R_1$ désigne de préférence un groupe alkyle en $C_1$ à $C_4$ et R et n ont la définition indiquée dans la revendication 1, dans un milieu réactionnel organique à 100-220 °C, de préférence à 120-180 °C.

6. Procédé de production de dérivés d'anthraquinones, caractérisé en ce qu'on condense des formiminoesters d'amino-anthraquinones de formule

$$A—(—N = CH—OR')_m \qquad (VI)$$

dans laquelle A et m ont la définition indiquée dans la revendication 1 et R' désigne de préférence un groupe alkyle en $C_1$ à $C_4$, avec des 2.4-dihydroxyquinoléines de formule

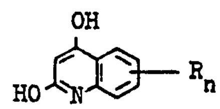

(VI)

dans laquelle R et n ont la définition indiquée dans la revendication 1, dans un milieu réactionnel organique à 100-220 °C, de préférence à 120-180 °C.

7. Procédé de production de dérivés d'anthraquinones suivant la revendication 1, caractérisé en ce qu'on condense des halogénures de formamidinium de formule

$$A—[NH—CH = N^{\ominus} (R')_2]_m (X^{\ominus})_m \qquad (X)$$

dans laquelle A et m ont la définition indiquée dans la revendication 1, R' désigne de préférence un groupe alkyle en $C_1$ à $C_4$ et $X^{\ominus}$ représente le chlore ou le brome, avec des 2,4-dihydroxyquinoléines de formule

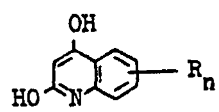

(VI)

dans laquelle R et n ont la définition indiquée dans la revendication 1, dans un solvant organique à 100-220 °C, de préférence entre 120-180 °C, en présence d'un accepteur d'acide.

8. Procédé de pigmentation de substances macromoléculaires organiques, caractérisé en ce qu'on utilise des dérivés d'anthraquinone suivant les revendications 1 à 4.

9. Une matière macromoléculaire organique pigmentée avec les dérivés d'anthraquinone des revendications 1 à 4.